# EUROPÄISCHE PATENTANMELDUNG

(11) **EP 3 508 303 A1**
(43) Veröffentlichungstag der Anmeldung: **10.07.2019**
(21) Anmeldenummer: 18020650.0
(22) Anmeldetag: 21.12.2018
(51) Int. Cl.: B23K 37/02, G05B 19/401, B25J 9/16, B23K 101/00

(54) **SYSTEM FÜR SCHWEISSEN EINER FAHRZEUGKAROSSERIE**

(30) Priorität: 22.12.2017 CZ 20170834
(71) Anmelder: Skoda Auto a.s., 29301 Mladá Boleslav (CZ)
(72) Erfinder: Cejka, Jan, CZ-46001 Liberec 13 (CZ)

(57) **Zusammenfassung**

System zum Schweißen der Fahrzeugkarosserie gebildet insbesondere durch einen Transporthalter (4), einen Spanntisch (5), einen Schweißroboter (1), eine Fahrzeugkarosserie (3), ein Kamerasystem und ein Steuerungssystem (2) des Schweißroboters (1) kommunikationsverbunden mit den Kameras (7) und den Schweißrobotern (1). Dieses Schweißsystem erhöht die Geschwindigkeit des Schweißprozesses und mindert die mechanische Aufwendigkeit bestehender Ausführung. Die Darstellung der Erfindung liegt in der Nutzung vom Kamerasystem für genaue Positionsbestimmung der Fahrzeugkarosserie (3) zwecks Effizienzsteigerung des Prozesses des Schweißens der Fahrzeugkarosserie (3).

## Beschreibung

### Technisches Gebiet

Die Erfindung betrifft das Schweißen der Fahrzeugkarosserie mit Robotern, das vor allem wegen höherer Prozessgenauigkeit und -geschwindigkeit mit einem Kamerasystem gesteuert wird.

### Bisheriger Stand der Technik

Eine Schweißstation für das Schweißen der Fahrzeugkarosserie in Karosseriebauten der Automobilindustrie wird durch eine Gruppe von Robotern gebildet. Diese Roboter bedienen meistens die Schweißzangen und führen Widerstandsschweißen an der Karosserie durch. Bestandteil der Station ist der spannende Hubtisch, dessen Aufgabe die Einspannung und Zentrierung der Karosserie vor dem eigentlichen Schweißen ist. Die Karosserie kommt aus der Fertigungslinie, mithilfe des Hubtisches wird sie angehoben und über RPS-Punkte, was die Referenzpunkte an der Fahrzeugkarosserie sind, auf Spannbolzen aufgesetzt und dort fixiert. Die Einspannung der Karosserie in dieser genau vorgegebenen Position ist notwendig, damit sie in der richtigen Position gegenüber dem Schweißroboter ist und damit zu keinem Verschieben der Karosserie durch die Krafteinwirkung der Schweißzangen kommt.

Der Nachteil dieser Ausführung besteht in der Notwendigkeit, die komplette Karosserie anzuheben. Dazu ist eine mechanisch komplizierte Ausführung des Hubtisches notwendig, dessen Reparatur bei einer Störung zeitlich aufwändig ist und einen Stillstand des jeweiligen Fertigungsprozesses verursacht. Allein die Anhebung jeder Karosserie beim Auflegen auf die Spannbolzen hat großen Zeitverzug zur Folge. Weiterer Nachteil dieser Konstruktionslösung besteht in der beschränkten Anzahl von Karosserietypen, die in dieser Weise eingespannt werden können. Verschiedene Karosserien haben verschiedene Positionen von RPS-Punkten und bei dem Einsatz für mehrere Karosserietypen müssen die Positionen der Spannbolzen angepasst werden. Es ist somit offenkundig, dass die Sicherstellung der genauen Karosserieposition vor dem Schweißen aufwendig und technologisch komplex ist.

Alle diese Aspekte bestehender Lösung führen zur großen Zeitverlusten, infolge derer wesentliche Verzögerungen in der Fertigung entstehen.

### Darstellung der Erfindung

Die Aufgabe wird durch ein erfindungsgemäßes System für Schweißen der Fahrzeugkarosserie gelöst, das einen Schweißroboter, ein Steuerungssystem des Schweißroboters, einen Transporthalter für die Fixierung der Fahrzeugkarosserie, einen Spanntisch für die Abstützung des Transporthalters umfasst, wobei der Spanntisch ein Fixierungselement für die Fixierung des Transporthalters gegenüber dem Spanntisch und die Karosserie mindestens drei Referenzpunkte aufweist. Das System umfasst weiter wenigstens drei mit dem Steuerungssystem des Schweißroboters kommunikationsverbundenen Kameras, die für die Aufnahme der Positionen von mindestens drei Referenzpunkten angeordnet sind, wobei das Steuerungssystem des Schweißroboters für die Positionseinstellung des Schweißroboters in Abhängigkeit vom Signal aus diesen mindestens drei Kameras ausgelegt ist.

Der Vorteil der Erfindung liegt also in dem Entfall der Notwendigkeit der Benutzung von Hubtischen oder anderer Hubvorrichtungen, deren Reparatur bei einer Störung technisch aufwendig ist. Weiterer Vorteil liegt in der Vereinfachung der Spannmechanik. Das Weglassen des Hubtisches bedeutet weiter eine Zeiteinsparung dank dem Entfall der Notwendigkeit, die gesamte Karosserie anzuheben. Durch das eingesetzte Kamerasystem und die Datenbank der Referenzebenen der Karosserie wird größere Variabilität in der Erkennung einzelner Karosserietypen sowie höhere Prozessgeschwindigkeit der genauen Positionierung der Karosserie sichergestellt.

In einer vorteilhaften Ausführung verfügen wenigstens drei Kameras mit der Technologie für 3D-Aufnahmen. Dies ermöglicht die Position der drei Referenzpunkte in allen Achsen, x, y sowie z zu ermitteln und so nicht nur eine Verschwenkung oder Verschiebung der Fahrzeugkarosserie in der horizontalen Ebene, sondern auch die Verschiebung und Verschwenkung der Fahrzeugkarosserie gegenüber allen Achsen x, y sowie z zu erkennen.

Vorteilhaft können drei Kameras ausgestattet mit einem Lasersensor eingesetzt werden, welcher in den Industriekameras oft genutzt wird. Solche Kameras haben eine Reihe von Vorteilen, die für eine in diesem Technikbereich fachkundige Person offenbar sind, wie die Zuverlässigkeit, der Preis sowie die Genauigkeit. In dieser Ausführung kann somit die Einstellpräzision der Arbeit der Schweißroboter am konkreten Fahrzeugkarosserieteil ungeachtet seiner Position weiter gesteigert werden.

Das System umfasst vorteilhaft mindestens vier Referenzpunkte und wenigstens vier Kameras. Gegenüber der Mindestkonfiguration mit drei Kameras gewährt diese Anordnung dem System die Möglichkeit, noch höhere Genauigkeit zu erreichen und auch bei einer Störung an einer der Kameras weiter zu arbeiten.

### Erläuterung der Zeichnungen

Die Darstellung der Erfindung wird weiter anhand von Ausführungsbeispielen erläutert, die unter Nutzung von Zeichnungen beschrieben sind, wobei zeigen die:
Fig. 1 - eine mögliche Ausführung der Erfindung,
Fig. 2 - eine mögliche Ausführung der Erfindung mit vier Kameras,
Fig. 3 - eine Seitenansicht der möglichen Ausführung der Erfindung mit dargestellten Achsen der Ebenen,
Fig. 4 - eine Ansicht von Unten auf die Fahrzeugkarosserie mit einer Detailansicht der Referenzpunkte
Fig. 5 - eine mögliche Ausführung der Erfindung mit Detailansicht des Fixierungselementes.

### Ausführungsbeispiel der Erfindung

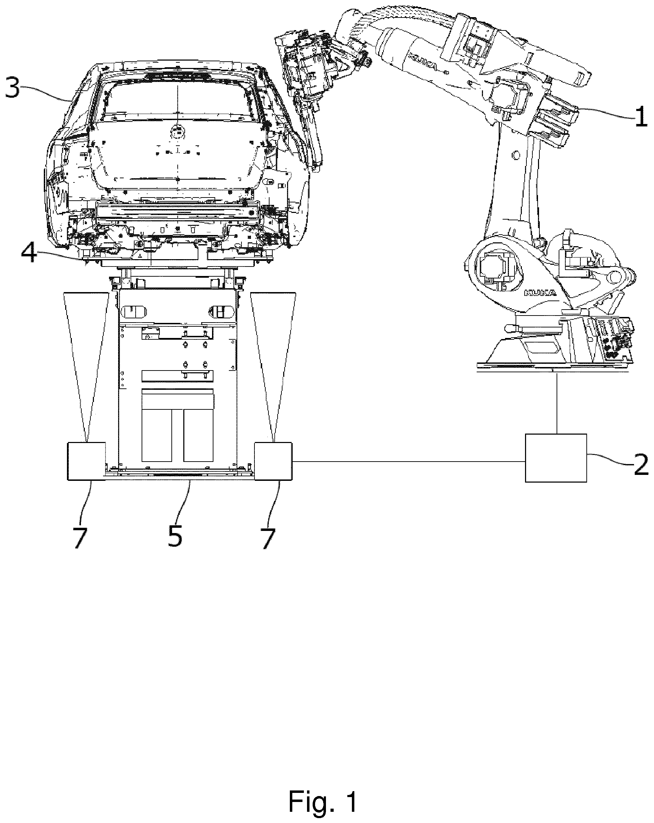

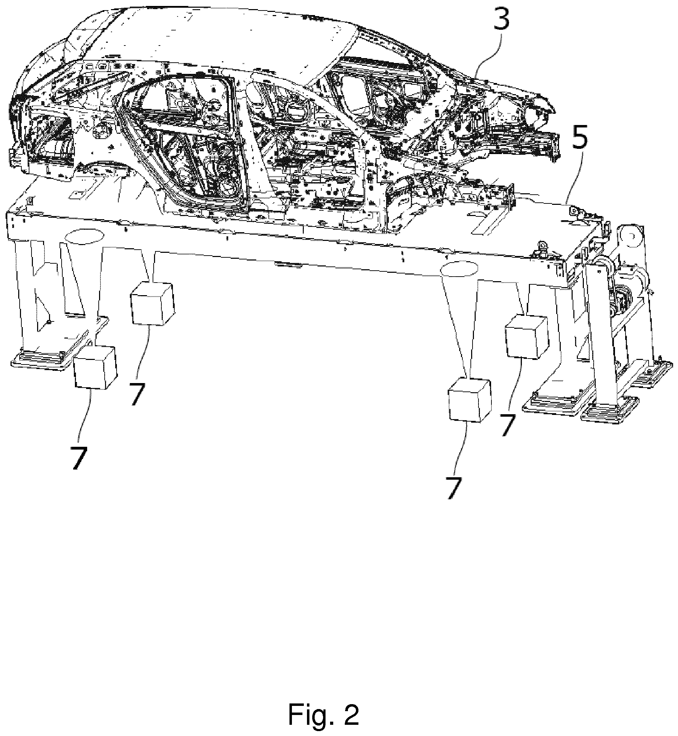

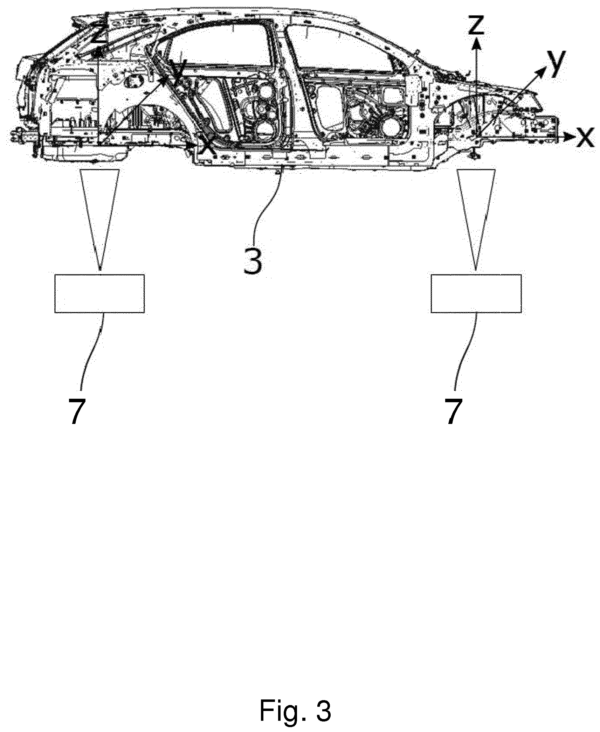

Ein Ausführungsbeispiel der Erfindung ist der Fig. 1 zu entnehmen, wo ein Schweißroboter 1, eine Fahrzeugkarosserie 3, ein Transporthalter 4 für die Fixierung der Fahrzeugkarosserie 3, ein Spanntisch 5 für die Abstützung dieses Transporthalters 4, ein Fixierungselement 6 für die Fixierung des Transporthalters 4 gegenüber dem Spanntisch 5, ferner Kameras 7, in dieser Ausführung vier, siehe Fig. 2, kommunikationsverbunden mit dem Steuerungssystem 2 des Schweißroboters 1, das mit einem Schweißroboter 1 oder mehreren Schweißrobotern 1 kommunikationsverbunden ist, dargestellt sind. Die Kameras 7 in dieser Ausführung nehmen die Position der Referenzpunkte 8 in allen drei Achsen x, y, z auf, wie in der Fig. 3 dargestellt ist. Wie der Fig. 1 zu entnehmen ist, sind die Kameras 7 unter der Fahrzeugkarosserie 3 mit nach oben gerichtetem Objektiv angeordnet, sodass jede ungefähr unter dem weiter beschriebenen Referenzpunkt 8 angeordnet und vorteilhaft gerade zum Spanntisch 5 fixiert ist.

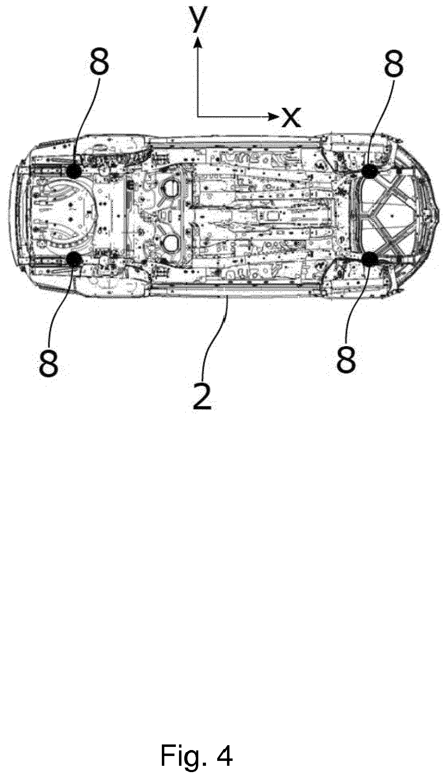

Jede Fahrzeugkarosserie 3 weist also vier Referenzpunkte 8 auf, die als Öffnungen in dem Teil der Fahrzeugkarosserie 3 ausgebildet sind, wie in Fig. 4 dargestellt ist. Alternativ kann es jedoch andere Anzahl dieser Referenzpunkte 8 geben, mindestens jedoch jeweils drei. Sie können ebenso als Vorsprünge, Nuten oder andere visuelle und Formelemente ausgeführt sein, die mit der Kamera eindeutig identifiziert werden können.

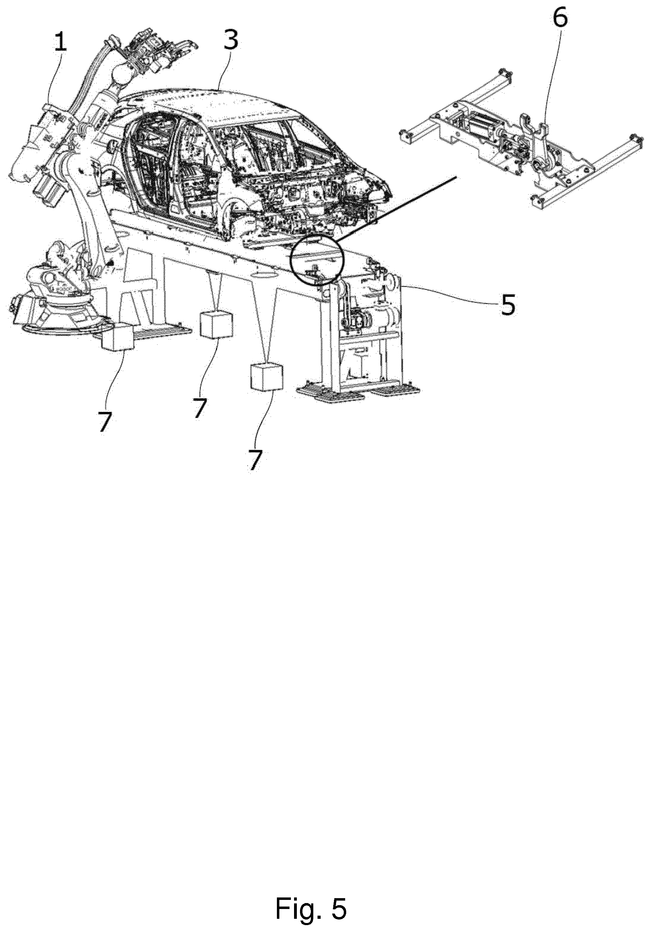

Bei dem eigentlichen Fertigungsprozess wird die Fahrzeugkarosserie 3 mittels des Transporthalters 4 gehandhabt. Der Transporthalter 4 dient also für die Fixierung der Fahrzeugkarosserie 3 und auch für den Transport der Fahrzeugkarosserie 3 zum Spanntisch 5, der zur Abstützung des Transporthalters 4 bei dem Schweißprozess mit Schweißrobotern 1. Der Transporthalter 4 ist zum Spanntisch 5 mit einem Fixierungselement 6 fixiert, das als eine Spannklemme mit Öffnungswinkel von 180° ausgeführt ist, wie in Fig. 5 dargestellt ist. In weiteren möglichen Ausführungen kann als Fixierungselement 6 ein Hebelmechanismus oder eine Magnetbremse des Transporthalters 4 für die Fixierung der Fahrzeugkarosserie 3 oder anderes System für die Positionierung der Fahrzeugkarosserie 3 eingesetzt werden. Das Kamerasystem nimmt nach solcher Fixierung die Position der Referenzpunkte 8 auf, wobei jede Kamera 7 die Position eines Referenzpunktes 8 aufnimmt. Die Daten aus den Kameras 7 werden verarbeitet und eine relative Position der Fahrzeugkarosserie 3 gegenüber den Schweißtrajektorien der Schweißroboter 1 durch den Abgleich mit dem Referenzmodell der Fahrzeugkarosserie 3 aus der Datenbank ermittelt. Die Roboter 1 korrigieren anhand dieser Daten die Position der Trajektorie und schweißen an der geforderten Stelle, obwohl sich die Position der einzelnen Bauteile unterscheidet.

Die größten Differenzen in der Positionierung der Fahrzeugkarosserie 3 bestehen in der Verschiebung oder Verschwenkung der Fahrzeugkarosserie 3 in der durch Achsen x und y definierten horizontalen Ebene, wie in Fig. 4 dargestellt ist. Für die Beobachtung dieser Abweichungen müssen mindestens drei Kameras 7 verwendet werden. In diesem Ausführungsbeispiel werden vier Kameras 7 verwendet. Gegenüber der Mindestkonfiguration mit drei Kameras 7 gewährt diese Anordnung dem System die Möglichkeit, noch höhere Genauigkeit zu erreichen und auch bei einer Störung an einer der Kameras 7 weiter zu arbeiten. Die Kameras 7 können in vorteilhafter Ausführung 3D-Bilder aufnehmen. Solche Kameras 7 können die vertikale Position des Referenzpunktes 8 ermitteln und zwar unter Nutzung des Prinzips der Aufnahme gleiches Objektes mit zwei Objektiven. Durch die Berechnung wird dann die tatsächliche Entfernung des Objektes ermittelt. Weitere Möglichkeit stellen die Kameras 7 mit Laseraufzeichnung der Entfernung des Objektes dar. Weiter kann ein Ultraschallsystem oder andere Systeme für die Distanzmessung genutzt werden. Dank dessen kann die Position der Fahrzeugkarosserie 3 im Raum vollständig und das mit hoher Genauigkeit bestimmt werden. Ferner kann auch die Verschwenkung der Fahrzeugkarosserie 3 gegenüber einer beliebigen Achse x, y, z bestimmt werden. Die Nutzung von mehreren Kameras 7 hat zu Folge, dass die Position der Referenzpunkte 7 und somit der Fahrzeugkarosserie 7 selbst genauer ermittelt wird.

Ist die genaue Position der fixierten Fahrzeugkarosserie 3 bekannt, wird anhand dieser Kenntnis das Schweißen mit Schweißrobotern 1 durchgeführt.

Nach Ende des Schweißprozesses mit den Schweißrobotern 1 wird der Transporthalter 4 vom Fixierungselement 6 losgelost und er läuft in der Fertigungsstraße weiter.

Das Fixierungselement 6, also die Fixierung des Transporthalters 4 mit der Fahrzeugkarosserie 3 zum Spanntisch 5, wird zum Beispiel als eine Spannklemme mit dem Öffnungswinkel von mindestens 180°, verschiedene Hebelmechanismen oder eine Fixierung mit Dauer- oder Elektromagnet realisiert, siehe Fig. 5. So fixierter Transporthalter 4 mit der Fahrzeugkarosserie 3 hat weiterhin ungenaue Position der Fahrzeugkarosserie 3 gegenüber der Schweißtrajektorie der Schweißroboter 1. Die Korrektur der Trajektorie der Schweißroboter 1 erfolgt dann aufgrund der Auswertung von Daten aus dem Steuerungssystem 2. Den im Technikbereich fachkundigen Personen ist offenbar, dass die im Computermodell der Karosserie gespeicherten Trajektorien oder Punkte für das Schweißen anhand der tatsächlichen Position der Karosserie im Raum verschoben werden können. Dadurch kommt es zum grundsätzlichen Wandel der Technologie, von der wiederholt durchgeführten Tätigkeit der Schweißroboter 1 aufgrund des vordefinierten Programmes und ohne Information über die tatsächliche Fahrzeugkarosserie 3, zur Technologie, wo die Schweißroboter 1 mittels des Feedbacks aus den Kameras 7 die Information über den realen Bauteil haben, der im Rahmen der Fertigungsstraße auf ihren Arbeitsplatz gekommen ist.

### Bezugszeichenliste

- 1: - Schweißroboter
- 2: - Steuerungssystem des Schweißroboters
- 3: - Fahrzeugkarosserie
- 4: - Transporthalter
- 5: - Spanntisch
- 6: - Fixierungselement
- 7: - Kamera
- 8: - Referenzpunkt

## Patentansprüche

1. System zum Schweißen der Fahrzeugkarosserie bestehend aus einem Schweißroboter (1), einem Steuerungssystem (2) des Schweißroboters (1), einem Transporthalter (4) für die Fixierung der Fahrzeugkarosserie (3), einem Spanntisch (5) für die Abstützung des Transporthalters (4), wobei der Spanntisch ein Fixierungselement (6) für die Fixierung des Transporthalters (4) gegenüber dem Spanntisch (5) umfasst, wobei die Karosserie wenigstens drei Referenzpunkte (8) aufweist, **dadurch gekennzeichnet, dass** es wenigstens drei Kameras (7) kommunikationsverbunden mit dem Steuerungssystem (2) des Schweißroboters (1) umfasst, die für die Aufzeichnung der Positionen der drei Referenzpunkte (8) angeordnet sind, wobei das Steuerungssystem (2) des Schweißroboters (1) für die Einstellung der Position des Schweißroboters (1) in Abhängigkeit vom Signal aus diesen wenigstens drei Kameras (7) ausgelegt ist.

2. System zum Schweißen der Fahrzeugkarosserie gemäß Anspruch 1 **dadurch gekennzeichnet, dass** wenigstens drei Kameras (7) mit der Technologie für 3D-Aufnahmen ausgestattet sind.

3. System zum Schweißen der Fahrzeugkarosserie gemäß Anspruch 1 oder 2 **dadurch gekennzeichnet, dass** wenigstens drei Kameras (7) einen Lasersensor aufweisen.

4. System zum Schweißen der Fahrzeugkarosserie gemäß beliebigen der vorgenannten Ansprüche 1 **dadurch gekennzeichnet, dass** es wenigstens vier Referenzpunkte (8) und wenigstens vier Kameras (7) umfasst.
